(19) Europäisches Patentamt
European Patent Office
Office européen des brevets

(11) **EP 3 520 024 B1**

(12) **EUROPÄISCHE PATENTSCHRIFT**

(45) Veröffentlichungstag und Bekanntmachung des Hinweises auf die Patenterteilung:
**11.09.2024 Patentblatt 2024/37**

(21) Anmeldenummer: **17794220.8**

(22) Anmeldetag: **28.09.2017**

(51) Internationale Patentklassifikation (IPC):
***G06V 20/58*** (2022.01)

(52) Gemeinsame Patentklassifikation (CPC):
**G06V 20/58**

(86) Internationale Anmeldenummer:
**PCT/DE2017/200102**

(87) Internationale Veröffentlichungsnummer:
**WO 2018/059631 (05.04.2018 Gazette 2018/14)**

(54) **DETEKTION UND VALIDIERUNG VON OBJEKTEN AUS SEQUENTIELLEN BILDERN EINER KAMERA MITTELS HOMOGRAPHIEN**

DETECTION AND VALIDATION OF OBJECTS FROM SEQUENTIAL IMAGES OF A CAMERA USING HOMOGRAPIES

DÉTECTION ET VALIDATION D'OBJETS PROVENANT D'IMAGES SÉQUENTIELLES D'UNE CAMÉRA EN UTILSANT DES HOMOGRAPHIES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2016 DE 102016218852**

(43) Veröffentlichungstag der Anmeldung:
**07.08.2019 Patentblatt 2019/32**

(73) Patentinhaber: **Continental Autonomous Mobility Germany GmbH**
**85057 Ingolstadt (DE)**

(72) Erfinder: **WALTER, Michael**
**9435 Heerbrugg (CH)**

(74) Vertreter: **Continental Corporation**
**c/o Continental Automotive GmbH**
**Intellectual Property**
**Nordostpark 30**
**90411 Nürnberg (DE)**

(56) Entgegenhaltungen:
**EP-A1- 2 993 654        US-A1- 2015 086 080**
**US-A1- 2015 332 114**

- **M.I.A. LOURAKIS ET AL: "Detecting Planes In An Uncalibrated Image Pair", PROCEEDINGS OF THE 13TH BRITISH MACHINE VISION CONFERENCE : 2ND - 5TH SEPTEMBER 2002, CARDIFF UNIVERSITY, 1 January 2002 (2002-01-01), Cardiff, pages 57.1 - 57.10, XP055439691, ISBN: 978-1-901725-19-3, DOI: 10.5244/C.16.57**
- **JOHANN PRANKL ET AL: "Interactive object modelling based on piecewise planar surface patches", COMPUTER VISION AND IMAGE UNDERSTANDING, vol. 117, no. 6, 1 June 2013 (2013-06-01), pages 718 - 731, XP055162053, ISSN: 1077-3142, DOI: 10.1016/j.cviu.2013.01.010**
- **PENG CHANG ET AL: "Stereo-based vision system for automotive imminent collision detection", INTELLIGENT VEHICLES SYMPOSIUM, 2004 IEEE PARMA, ITALY JUNE 14-17, 2004, PISCATAWAY, NJ, USA,IEEE, 14 June 2004 (2004-06-14), pages 274 - 279, XP010727481, ISBN: 978-0-7803-8310-4, DOI: 10.1109/IVS.2004.1336394**

• PRATEEK SINGHAL ET AL: "Top Down Approach to Detect Multiple Planes from Pair of Images", PROCEEDINGS OF THE 2014 INDIAN CONFERENCE ON COMPUTER VISION GRAPHICS AND IMAGE PROCESSING, ICVGIP '14, 1 January 2014 (2014-01-01), New York, New York, USA, pages 1 - 8, XP055439700, ISBN: 978-1-4503-3061-9, DOI: 10.1145/2683483.2683536

**Beschreibung**

Die Erfindung betrifft ein Verfahren zur Erkennung von Objekten aus Bildern einer Kamera und kann insbesondere bei kamerabasierten Fahrerassistenzsystemen verwendet werden.

Fahrzeugerkennungssysteme nach dem aktuellen Stand der Technik sind meist klassifikationsbasiert. Klassifikationsbasierte Systeme können Fahrzeuge bzw. Fahrzeugkomponenten wiedererkennen, die sie in ihren Trainingsdaten gesehen haben. Neue Fahrzeugdesigns, sowie sich verändernde Aufbauten können jedoch zu einer stark reduzierten System-Performance führen und fordern generische Ansätze zur Objekterkennung.

US 2014/0161323 A1 zeigt ein Verfahren zur Erzeugung dichter dreidimensionaler Strukturen in einer Straßenumgebung aus Bildern, die mit einer Monokamera aufgenommen werden.

EP 2 993 654 A1 zeigt ein Verfahren zur Frontkollisionswarnung (FCW) aus Kamerabildern. Hierbei wird ein Bildausschnitt analysiert, wohin das eigene Fahrzeug in einem vorgegebenen Zeitintervall gelangen wird. Sofern dort ein Objekt erkannt wird, wird eine Kollisionswarnung ausgegeben.

J. Prankl et al. zeigen in "Interactive object modelling based on piecewise planar surface patches", Computer Vision and Image Understanding, Bd. 117, Nr. 6, 2013, S. 718-731, DOI: 10.1016/j.cviu.2013.01.010 eine interaktive Objektmodellierung basierend auf stückweise ebenen Oberflächen-Patches. Mehrere Ebenen werden in Bildfolgen detektiert, indem Hypothesen für Ebenen anhand getrackter Bildpunkte gebildet werden. Die Validität der Hypothesen wird überprüft. Es wird ein zweistufiger Ansatz vorgeschlagen, bei dem im ersten Schritt eine affine Homographie mit fünf Parameter als Eingangsüberprüfung berechnet wird. Nur, falls diese Überprüfung erfolgreich ist, wird die volle Homographie mittels dem Direct Linear Transform nach Hartley berechnet. Ebene Patches werden getrackt und aus den Ebenen werden Objekte modelliert.

P. Chang et al. zeigen in "Stereo-Based Vision System for Automotive Imminent Collision Detection", Intelligent Vehicles Symposium, 2004 IEEE Parma, Italy June 14-17, Piscataway NJ, USA, IEEE, 2004-06-14, Seiten 274-279, DOI: 10.1109/IVS.2004.1226394 ein Verfahren zur Erkennung einer drohenden Kollision basierend auf Bilddaten einer Stereokamera. Anhand einer Bildsegmentierung anhand der Tiefenbilder kann ein Kollisionsobjekt detektiert und dessen Geschwindigkeit ermittelt werden.

P. Singhal et al. zeigen in "Top Down Approach to Detect Multiple Planes in Images", Proceedings of the 2014 Indian Conference on Computer Vision Graphics and Image Processing, ICVGIP '14, 2014-01-01, Seiten 1-8, New York, New York, USA, DOI: 10.1145/2683483.2683536 ein Verfahren zur Erkennung mehrerer Ebenen in Bildern im Rahmen einer 3D-Rekonstruktion.

US 2015/086080 A1 zeigt ein Fahrerassistenzsystem mit einer Kamera und einer Erkennung einer vertikalen Abweichung in der Fahrbahnkontur während der Fahrt. Erste, zweite und dritte Bilder der Fahrbahn werden mit der Kamera erfasst. Indem Bildpunkte der Fahrbahn im ersten Bild mit korrespondierenden Bildpunkten der Fahrbahn im zweiten Bild gematcht werden, wird eine erste Homographie berechnet, die das erste Bild der Fahrbahn in das zweite Bild umwandelt. Eine zweite Homographie wird berechnet, die das zweite Bild der Fahrbahn in das dritte Bild der Fahrbahn umwandelt. Eine verkettete Homographie wird berechnet durch eine Verkettung von erster und zweiter Homographie. Die verkettete Homographie wird als Initialschätzung verwendet, um eine dritte Homographie zu berechnen, die das erste Bild der Fahrbahn in das dritte Bild der Fahrbahn umwandelt.

M.I.A. Lourakis et al. zeigen in Detecting Planes In An Uncalibrated Image Pair, Proceedings of the 13th British Machine Vision Conference, 2th-5th September 2002, Cardiff University, Seiten 57.1-57.10, XP055439691, Cardiff, DOI: 10.5244/C. 16.57 ISBN 978-1-901725-19-3, ein Verfahren zur Detektion von Ebenen anhand von zwei Bildern, wobei Ergebnisse aus der projektiven Geometrie verwendet werden.

Es ist eine Aufgabe der vorliegenden Erfindung, ein Verfahren zur generischen Erkennung von Objekten anzugeben.

Ein Ausgangspunkt der Erfindung sind die folgenden Überlegungen: Sind die Kamerapositionen zweier Frames (Einzelbilder) bekannt, lassen sich Punkt-Korrespondenzen (korrespondierende Merkmalspunkte) triangulieren, aber es werden keine Objekte generiert, da die Triangulation über kein Modelwissen verfügt, das eine Punktewolke in sinnvolle Objekten clustern könnte. Nachteile monokularer Systeme sind, dass Objekte nahe dem Epipol nur ungenau trianguliert werden können und sich dort kleinste Fehler in der Egomotion (Kamera-Eigenbewegung) bemerkbar machen. Als Epipol bezeichnet man den Bildpunkt in einem ersten Kamerabild, an dem das Zentrum der Kamera zu einem zweiten Zeitpunkt abgebildet wird. Während einer Geradeausfahrt entspricht z.B. der Fluchtpunkt dem Epipol. Dies ist jedoch der relevante Bereich, um Kollisionen mit stehenden bzw. vorrausfahrenden Fahrzeugen zu erkennen. Dynamische Objekte können trianguliert werden, wenn sie sich gemäß der Epipolar-Geometrie bewegen. Sie werden jedoch aufgrund der nicht bekannten Relativgeschwindigkeit zu nah oder zu weit entfernt geschätzt.

Werden anstelle einzelner Korrespondenzen, mehrere benachbarte Korrespondenzen (korrespondierende Merkmale) betrachtet, lassen sich Objekte aufgrund unterschiedlicher Geschwindigkeiten, Skalierungen und Deformation segmentieren.

Ein erfindungsgemäßes Verfahren zur Detektion von Objekten aus einer Folge von Bildern einer Fahrzeugkamera ist Gegenstand des Anspruchs 1. Das Verfahren umfasst die Schritte:

a) Aufnahme einer Folge von Bildern mit der Fahrzeugkamera,
b) Ermittlung von korrespondierenden Merkmalen in zwei aufeinander folgenden Bildern,
c) Berechnung von Homographien für benachbarte korrespondierende Merkmale zur Bestimmung einer Mehrzahl von Ebenen und zur Zuordnung zu jeweils einer Ebene im Raum,
d) Bestimmung der Mehrzahl von Ebenen im Raum durch eine Zuordnung von benachbarten korrespondierenden Merkmalen zu jeweils einer Ebene im Raum,
e) Segmentierung der korrespondierenden Merkmale anhand der berechneten Homographien, und
f) Detektion von Objekten unter Berücksichtigung der (in Schritt d)) bestimmten Ebenen und der (gemäß Schritt e)) segmentierten Merkmale.

Bevorzugt ist die Fahrzeugkamera zur Aufnahme einer Umgebung eines Fahrzeugs ausgebildet. Bei der Umgebung handelt es sich insbesondere um die vor dem Fahrzeug liegende Umgebung. Vorzugsweise ist die Fahrzeugkamera in eine Fahrerassistenzvorrichtung integrierbar oder mit dieser verbindbar, wobei die Fahrerassistenzvorrichtung insbesondere zur Objekterkennung aus den von der Fahrzeugkameravorrichtung bereitgestellten Bilddaten ausgebildet ist. Bevorzugt ist die Fahrzeugkameravorrichtung eine im Innenraum des Kraftfahrzeugs hinter der Windschutzscheibe anzuordnende und in Fahrtrichtung gerichtete Kamera. Besonders bevorzugt ist die Fahrzeugkamera eine monokulare Kamera.
Bevorzugt werden mit der Fahrzeugkamera zu bestimmten bzw. bekannten Zeitpunkten Einzelbilder aufgenommen, woraus sich eine Folge von Bildern ergibt.
Als Korrespondenz wird die Entsprechung eines Merkmals in einem ersten Bild zu demselben Merkmal in einem zweiten Bild bezeichnet. Korrespondierende Merkmale in zwei Bildern können auch als Flussvektor beschrieben werden, der angibt wie sich das Merkmal im Bild verschoben hat. Ein Merkmal kann insbesondere ein Bildausschnitt (bzw. Patch), ein Pixel, eine Kante oder eine Ecke sein.
Schritt d) kann wie folgt beschrieben werden: Ermittlung von mehreren Ebenen, in denen jeweils eine Vielzahl von benachbarten korrespondierenden Merkmalen liegt bzw. zu liegen kommt.
Unter Schritt d) wird auch subsummiert, dass eine Mehrzahl von Ebenen im Raum vorgegeben wird, und eine Zuordnung von benachbarten korrespondierenden Merkmalen zu jeweils einer der vorgegebenen Eben vorgenommen wird (vgl. unten).
Der Begriff "Ebene" beschreibt im Kontext der vorliegenden Erfindung folgende Zusammenhänge: einerseits ein Kriterium zur Akkumulation benachbarter korrespondierender Merkmale. D.h. diese werden als zusammengehörig angesehen, wenn sie in einer gemeinsamen Ebene im Raum liegen und sich entsprechend der Bewegung der Ebene zeitlich entwickeln.
Derart akkumulierte korrespondierende Merkmale werden anschließend als "Bodenebene" bezeichnet, da sie alle in der Ebene, die der Fahrbahnebene entspricht liegen. Jedoch erstreckt sich eine solche Bodenebene nicht ins Unendliche, sondern meint einen Teilbereich der Ebene, nämlich den, in dem tatsächlich korrespondierende Merkmale angeordnet sind.
In Schritt f) meint die Formulierung "unter Berücksichtigung...", dass die in Schritt d) bestimmten mehreren Ebenen bei der Detektion von Objekten berücksichtigt werden. Dies kann beispielsweise in der Art geschehen, dass aus einer erkannten Bodenebene eine Fahrbahnhypothese abgeleitet wird, und dass aus einer Rückwandebene bzw. einer Seitenwandebene eine Objekthypothese für ein erhabenes Objekt generiert wird. Bereits aus einer Fahrbahnhypothese und Objekthypothese(n) für erhabene Objekte kann eine Freiraumdetektion erfolgen, die angibt, welcher Freiraum in der Umgebung des Fahrzeugs aktuell befahrbar ist. Eine vorteilhafte Anwendung der Freiraumdetektion liegt z.B. in einer Fahrbahnrandermittlung, die nicht von der Erkennung von Fahrspurmarkierungen abhängig ist.
Mit der Formulierung "Detektion von Objekten" kann also beispielsweise eine Generierung von Objekthypothesen bzw. Objekten gemeint sein.
Eine Homographie beschreibt die Korrespondenz von Punkten auf einer Ebene zwischen zwei Kamerapositionen bzw. die Korrespondenz zweier Punkte in zwei aufeinanderfolgenden Bildern der Fahrzeugkamera. Durch die Berechnung von Homographien für benachbarte korrespondierende Merkmale kann so die Zuordnung von benachbarten korrespondierenden Merkmalen zu jeweils einer Ebene im Raum erfolgen (s. Schritt d)).
Insbesondere anhand der berechneten Homographien können die korrespondierenden Merkmale segmentiert werden, also unterschiedlichen Segmenten zugeordnet werden. In Schritt f) kann dann eine Detektion von Objekten unter Berücksichtigung der segmentierten Merkmale erfolgen.
Ein erfindungsgemäßes Verfahren umfasst den Schritt: Zuordnung von benachbarten korrespondierenden Merkmalen zu jeweils einer Bodenebene, einer Rückwandebene oder einer Seitenwandebene. Im Falle eines Koordinatensystems, bei dem die x-Richtung horizontal bzw. lateral, die y-Richtung vertikal und die z-Richtung in Fahrzeuglängsrichtung verläuft, kann eine Bodenebene normal zur y-Richtung, eine Rückwandebene normal zur z-Richtung und eine Seitenwandebene normal zur x-Richtung vorgegeben werden. Durch eine Berechnung von Homographien einer Bodenebene, einer Rückwandebene und einer Seitenwandebene kann für benachbarte korrespondierende Merkmale eine Zuordnung zu einer dieser Ebenen erfolgen.

Bevorzugt können die Homographien für die Rückwandebene nach Gleichung (10) bzw. für die Bodenebene nach Gleichung (9) bzw. für die Seitenwandebene nach Gleichung (11) berechnet werden. Hierbei sind a, b, c Konstanten, $x_0$, $y_0$, $x_1$, $y_1$ bezeichnen Korrespondenzen im ersten Bild (Index 0), aufgenommen zu einem Zeitpunkt t-0, und zweiten Bild (Index 1), aufgenommen zu einem früheren Zeitpunkt t-1, und $t_x$, $t_y$, $t_z$ sind die Komponenten des Vektors t/d. $t$ beschreibt die Translation der Fahrzeugkamera und d die Entfernung zu einer Ebene (senkrecht zu dieser Ebene), also entlang des Normalenvektors dieser Ebene. Die Komponenten $t_x$, $t_y$ bzw. $t_z$ werden im Folgenden auch als "inverse TTC" bezeichnet. TTC kommt von ‚Time to collision' und ergibt sich in einer Raumrichtung als Abstand geteilt durch Translationsgeschwindigkeit.

Gemäß einer vorteilhaften Weiterbildung können, falls mehrere Ebenen mit identischer Orientierung auftreten, die Ebenen mit identischer Orientierung anhand der zugehörigen $t_x$, $t_y$, $t_z$ -Werte getrennt werden. Beispielsweise können zwei Rückwandebenen, die in z-Richtung unterschiedlich weit von der Fahrzeugkamera entfernt sind, über unterschiedliche $t_z$-Werte voneinander unterschieden werden.

Bevorzugt kann ein Bild durch ein Gitter in gleichartige Zellen unterteilt werden, und für jede Zelle kann aus den darin ermittelten korrespondierenden Merkmalen eine Homographie berechnet werden. Zellen mit übereinstimmender Homographie können anschließend geclustert werden.

Bevorzugt kann, falls die berechnete Homographie einer ersten Zelle nicht hinreichend mit einer Homographie einer benachbarten Zelle übereinstimmt, zur Ermittlung einer Ebenengrenze vorteilhaft ein sogenannter Rückprojektionsfehler einzelner korrespondierender Merkmale betrachtet werden. Korrespondierende Merkmale können durch den Rückprojektionsfehler bewertet werden. Der Rückprojektionsfehler gibt den Unterschied an zwischen dem gemessenen Fluss und dem aus der berechneten Homographie prädizierten Fluss an. Mit anderen Worten bezeichnet der Rückprojektionsfehler einer Ebene die Differenz zwischen einem Punkt x zum Zeitpunkt t-0 und dem gemäß der Homographie dieser Ebene abgebildeten korrespondierenden Punktes zum vorangegangenen Zeitpunkt t-1 beschrieben wird (siehe unten: Gleichung 4).

Wird der Rückprojektionsfehler eines korrespondierenden Merkmals in einer ersten Zelle mit den Rückprojektionsfehlern der Homographien der benachbarten Zellen verglichen und dieses korrespondierende Merkmal der Homographie mit dem geringstem Fehler zugewiesen, kann die Ebenengrenze (bzw. Segmentgrenze bzw. Clustergrenze) innerhalb der ersten Zelle verfeinert werden. Auf diese Weise können verschiedene korrespondierende Merkmale einer Zelle unterschiedlichen Ebenen zugeordnet werden.

Bevorzugt kann die Zuordnung von Ebenen zu benachbarten korrespondierenden Merkmalen im Wesentlichen im gesamten Bild der Fahrzeugkamera (z.B. in mindestens 80% der Bildfläche, bevorzugt mindestens 90%) ermittelt werden. Da das erfindungsgemäße Verfahren sehr schnell ausgestaltet werden kann, ist eine generische Objektdetektion bzw. Szeneninterpretation für nahezu das gesamte Bild in Echtzeit möglich.

Gegenstand der Erfindung ist weiterhin eine Vorrichtung zur Detektion von Objekten aus einer Folge von Bildern einer Fahrzeugkamera mit den Merkmalen des Anspruchs 14. Die Vorrichtung umfasst ein Kamerasteuergerät und eine Auswerteelektronik, wobei das Kamerasteuergerät dazu konfiguriert bzw. ausgebildet ist,

a) eine Folge von Bildern mit der Fahrzeugkamera aufzunehmen; und wobei die Auswerteelektronik dazu konfiguriert/ausgebildet ist,
b) korrespondierende Merkmale in zwei aufeinander folgenden Bildern zu ermitteln,
c) Homographien für benachbarte korrespondierende Merkmale zur Bestimmung einer Mehrzahl von Ebenen und zur Zuordnung zu jeweils einer Ebene im Raum zu berechnen,
d) die Mehrzahl von Ebenen im Raum durch eine Zuordnung von benachbarten korrespondierenden Merkmalen zu jeweils einer Ebene im Raum zu bestimmen,
e) korrespondierende Merkmale anhand der berechneten Homographien zu segmentieren, und
f) ein oder mehrere Objekte zu detektieren (bzw. zu generieren) unter Berücksichtigung der (in Schritt d)) bestimmten Ebenen und segmentierten Merkmale (Schritt e).

Das Kamerasteuergerät bzw. die Auswertungselektronik können insbesondere einen Mikrocontroller oder -prozessor, einen Digital Signal Processor (DSP), einen ASIC (Application Specific Integrated Circuit), einen FPGA (Field Programmable Gate Array) und dergleichen mehr sowie Software zur Durchführung der entsprechenden Steuerungs- bzw. Auswertungsschritte umfassen. Die vorliegende Erfindung kann somit in digitalen elektronischen Schaltkreisen, Computer-Hardware, Firmware oder Software implementiert sein.

Weitere Merkmale, Vorteile und Wirkungen der Erfindung ergeben sich aus der nachfolgenden Beschreibung bevorzugter Ausführungsbeispiele der Erfindung. Dabei zeigen:

Fig. 1     schematisch eine typische Deformation einer sich nähernden Rückwandebene;

Fig. 2     schematisch eine typische Deformation einer sich nähernden Bodenebene;

Fig. 3     schematisch eine typische Deformation a) einer sich schnell und b) einer sich langsam nähernden oder weiter entfernten Rückwandebene;

Fig. 4     schematisch eine Unterteilung eines Bildes mit zwei unterschiedlichen Segmenten in Zellen;

Fig. 5     Segmentierungsergebnisse nach einem dritten Iterationsschritt;

Fig. 6     Ebenen-Orientation zur Target Validierung (Validierung potentieller Kollisionsobekte);

Fig. 7     Time to Collision-Betrachtung; und

Fig. 8     Projektion (bzw. Warpen) des Leitplankensegments zum Zeitpunkt t-0 (rechts) auf t-1 (links).

Einander entsprechende Teile sind in der Regel in allen Figuren mit denselben Bezugszeichen versehen.

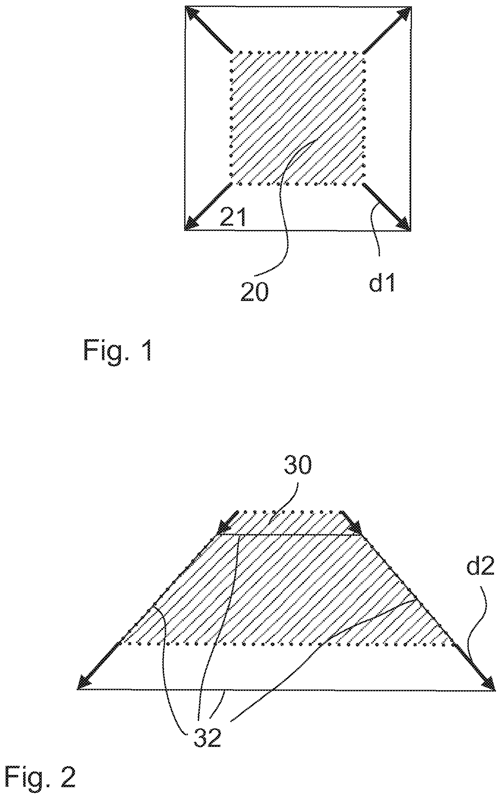

In Fig. 1 ist schematisch eine Rückwandebene (back plane) dargestellt, die zu einem ersten Zeitpunkt t-1 den schraffiert dargestellten Bereich (20, gepunktete Linie) einnimmt. Zu einem darauf folgenden Zeitpunkt t hat sich der Abstand zwischen der Fahrzeugkamera und der Rückwandebene verringert, was zu der durch die Pfeile (d1) angedeuteten Deformation des Bereichs (21, durchgezogene Linie) der Rückwandebene im Bild führt. Der Bereich (20; 21) skaliert bzw. vergrößert sich infolge der Relativbewegung von der Fahrzeugkamera zu der Rückwandebene.

In Fig. 2 ist schematisch eine Bodenebene (ground plane) dargestellt, die zu einem ersten Zeitpunkt t-1 den schraffiert dargestellten Bereich (30, gepunktete Linie) einnimmt. Dies könnte ein Abschnitt einer Fahrbahnoberfläche sein, auf der das Fahrzeug fährt. Infolge der Eigenbewegung der Fahrzeugkamera ändert sich der Bereich (im Bild) zu einem darauf folgenden Zeitpunkt t, was zu der durch die Pfeile (d2) skizzierten Deformation des Bereichs (32) der Bodenebene führt. Zum Zeitpunkt t begrenzen die mit 32 bezeichneten Linien den Bereich der Bodenebene. Unter der "Bodenebene" wird hier also ein abgegrenzter Bereich auf der Fahrbahnoberfläche verstanden. Der Randbereich ergibt sich z.B. aus Signaturen (bzw. Randpunkten) auf der Fahrbahnoberfläche, die in der Bilderfolge getrackt werden können.

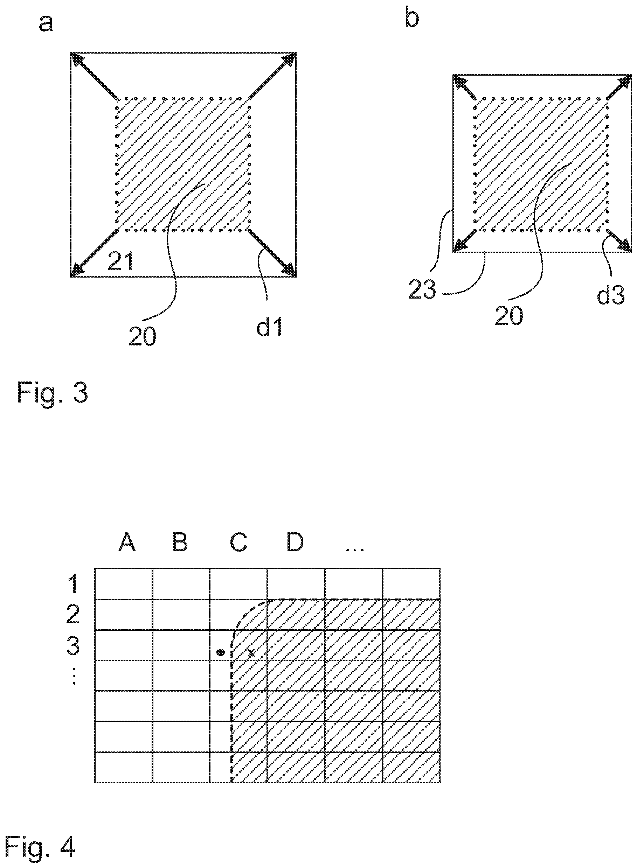

Fig. 3 veranschaulicht den Unterschied zwischen einer sich schnell (Fig. 3a: 20, 21; Deformation d1) und einer sich langsam (Fig. 3b) nähernden Rückwandebene (20, 23; Deformation d3), falls zum Zeitpunkt t-1 die Rückwandebene (20) in Fig. 3a denselben Abstand zur Fahrzeugkamera aufweist wie die Rückwandebene (20) in Fig. 3b.

Alternativ könnte Fig. 3 den Unterschied zwischen einer nahen Rückwandebene (Fig. 3a: 20, 21; Deformation d1) und einer weiter entfernten Rückwandebene (20, 23; Deformation d3) darstellen, die sich z.B. mit derselben (Relativ-) Geschwindigkeit bewegen, dann wäre das in Fig. 3b dargestellte Objekt (20, 21) im realen Raum größer als das in Fig. 3a dargestellte Objekt (20, 23).

Werden anstelle einzelner Korrespondenzen, mehrere benachbarte Korrespondenzen betrachtet, lassen sich Objekte aufgrund unterschiedlicher Geschwindigkeiten, Skalierungen und Deformation segmentieren.

Geht man davon aus, dass die Welt aus Ebenen besteht, kann man diese durch Homographien beschreiben und wie im Folgenden gezeigt wird über Ihre Distanz, Geschwindigkeit und Orientierung trennen.

Eine Homographie beschreibt die Korrespondenz von Punkten auf einer Ebene zwischen zwei Kamerapositionen bzw. die Korrespondenz zweier Punkte in zwei aufeinanderfolgenden Frames:

$$x_{t0} = H * x_{t1} \ \texttt{mit} \ x_{t0} = \begin{bmatrix} x_0 \\ y_0 \\ 1 \end{bmatrix}, \ x_{t1} = \begin{bmatrix} x_1 \\ y_1 \\ 1 \end{bmatrix}. \qquad (1)$$

Hierbei beschreibt der Vektor $x_{t0}$ die 3D-Korrespondenz zum Zeitpunkt t-0 des Vektors $x_{t1}$ zum Zeitpunkt t-1. Eine Homographie kann bildbasiert durch Kenntnis von vier Punkt-Korrespondenzen berechnet werden (vgl. Tutorial: Multiple View Geometry, Hartley, R. and Zisserman, A., CVPR June 1999: https://de.scribd.com/document/96810936/Hartley-Tut-4up abgerufen am 26.09.2016) . Die auf Seite 6 des Tutorials links oben (Folie 21) angegebenen Zusammenhänge lassen sich in der Notation von Gleichung 1 wie folgt formulieren:

$$\begin{bmatrix} -x_0 & -y_0 & -1 & 0 & 0 & 0 & x_1x_0 & x_1y_0 & x_1 \\ 0 & 0 & 0 & -x_0 & -y_0 & -1 & y_1x_0 & y_1y_0 & y_1 \\ & & & & \vdots & & & & \end{bmatrix} * \begin{bmatrix} h_1 \\ h_2 \\ h_3 \\ h_4 \\ h_5 \\ h_6 \\ h_7 \\ h_8 \\ h_9 \end{bmatrix} = 0 \qquad (2)$$

mit

$$H = \begin{bmatrix} h_1 & h_2 & h_3 \\ h_4 & h_5 & h_6 \\ h_7 & h_8 & h_9 \end{bmatrix}.$$

Alternativ kann bei Kenntnis der Kameratranslation t, der Rotation R und der Entfernung d entlang des Normalen Vektors n der Ebene die Homographie nach Gleichung 3 berechnet werden. Gleichung 3 verdeutlicht, dass sich bei einer inversen TTC $t/d$ ungleich Null, Ebenen mit unterschiedlichen Orientierung n modellieren lassen und dass sich Ebnen mit identischer Orientierung n über ihre inverse TTC trennen lassen.

$$H = [R - \frac{t*n\prime}{d}] \qquad (3)$$

Eine Homographie lässt sich theoretisch in den Normalenvektor n, die Rotationsmatrix R und die inverse TTC $t/d$ zerlegen. Leider ist diese Zerlegung numerisch äußerst instabil und empfindlich auf Messfehler.
Beschreibt man eine Szene durch Ebenen, lässt sie sich wie im Folgenden angegeben segmentieren.
Fig. 4 zeigt schematisch eine Unterteilung in Zellen (Grid, Gitter/-linien). Die Szene wird in NxM initiale Zellen unterteilt und jeder Punkt-Korrespondenz wird eine eindeutige ID zugewiesen. Diese ID gibt zunächst die Zugehörigkeit zu einer Zelle an. Im weiteren Verlauf kann die ID die Zugehörigkeit zu einem Cluster oder einem Objekt angeben.
Schraffiert ist ein Objekt (insb. eine Rückwandebene) im Vordergrund dargestellt. Der Hintergrund ist weiß dargestellt. Beinhaltet eine Zelle nur ein Objekt (Zellen B3, D3) wird eine Homographie diese Zelle sehr gut beschreiben. Beinhaltet eine Zelle jedoch mehr als ein Objekt (Zelle C3), wird die Homographie keines der beiden Objekte gut beschreiben. Werden die Punkt-Korrespondenzen (schwarzer Punkt bzw. schwarzes Kreuz bzw. x) den Clustern (bzw. Segment) der benachbarten Zellen (B3 bzw. D3) über Ihre Rückprojektionsfehler zugeordnet, wird der schwarze Punkt dem Segment der Zelle B3 und das schwarze Kreuz dem Segment der Zelle D3 zugeordnet, da die Homographie für die Zelle C3 weder den Vordergrund noch den Hintergrund gut beschreibt.
Ist Vorwissen über eine Szene vorhanden, lassen sich die Segmentgrößen an die Szene anpassen, indem z.B. größere Bereiche im Nahbereich des Fahrzeuges oder in Bereichen mit positiver Klassifikations-Antwort generiert werden. Für jedes Segment wird, wie in den Gleichungen 5 bis 10 gezeigt wird, eine dedizierte Back-/Ground- und Side-Plane-Homographie berechnet.
Die Berechnung der Back-/Ground- und Side-Plane-Homographie, erhöht die Trennschärfe, da eine Homographie mit weniger Freiheitsgraden Bereiche, die unterschiedliche Ebenen beinhalten, nur schlecht modellieren kann und somit korrespondierende Punkte einen höheren Rückprojektionsfehler aufweisen werden, siehe Fig. 4. Der Rückprojektionsfehler $e_i$ ist also ein Maß dafür, wie gut ein Punkt x zum Zeitpunkt t-0 durch die Homographie einer Ebene i des korrespondierenden Punktes zum Zeitpunkt t-1 beschrieben wird:

$$e_i = x_{t0} - H_i x_{t1}. \qquad (4)$$

Setzt man die statische Einbaulage der Kamera und Kamera Rotation in zwei unterschiedlichen Ansichten als gegeben voraus (z.B. durch Kenntnis der Kamera Kalibration und durch die Berechnung der Fundamental-Matrix in einem monokularen System oder durch Rotationswerte eines Drehratensensor-Clusters), lässt die inverse TTC $t/d$ mittels der um die statische Kamera-Rotation kompensierten Flussvektoren berechnen, wie im Folgenden exemplarisch für eine Ground Plane *n'* = [010] gezeigt wird. Ist die Rotation nicht bekannt, kann sie näherungsweise durch eine Einheitsmatrix ersetzt werden.

Ersetzt man den Quotienten *t/d* in Gleichung 3 durch die inverse Time to Collision $\begin{bmatrix} t_x \\ t_y \\ t_z \end{bmatrix}$ folgt:

$$\begin{bmatrix} x_0 \\ y_0 \\ 1 \end{bmatrix} = \begin{bmatrix} R - \begin{matrix} 0 & t_x & 0 \\ 0 & t_y & 0 \\ 0 & t_z & 0 \end{matrix} \end{bmatrix} \begin{bmatrix} x_1 \\ y_1 \\ 1 \end{bmatrix} \Rightarrow \begin{bmatrix} x_0 \\ y_0 \\ 1 \end{bmatrix} - R \begin{bmatrix} x_1 \\ y_1 \\ 1 \end{bmatrix} = - \begin{bmatrix} 0 & t_x & 0 \\ 0 & t_y & 0 \\ 0 & t_z & 0 \end{bmatrix} \begin{bmatrix} x_1 \\ y_1 \\ 1 \end{bmatrix}. \quad (5)$$

Durch Einführung der Konstanten a, b, c, wobei $\begin{bmatrix} a \\ b \\ c \end{bmatrix} := R \begin{bmatrix} x_1 \\ y_1 \\ 1 \end{bmatrix}$ ist, ergibt Gleichung 5 die vereinfachte Form:

$$\begin{bmatrix} x_0 \\ y_0 \\ 1 \end{bmatrix} - \begin{bmatrix} a \\ b \\ c \end{bmatrix} = - \begin{bmatrix} t_x y_1 \\ t_y y_1 \\ t_z y_1 \end{bmatrix} \Rightarrow \begin{bmatrix} x_0 \\ y_0 \\ 1 \end{bmatrix} = \begin{bmatrix} a \\ b \\ c \end{bmatrix} - \begin{bmatrix} t_x y_1 \\ t_y y_1 \\ t_z y_1 \end{bmatrix}. \quad (6)$$

Durch Normierung der homogenen Koordinaten ergibt sich:

$$x_0(c - t_z y_1) = a - t_x y_1 \quad (7)$$

$$y_0(c - t_z y_1) = b - t_y y_1 \quad (8)$$

Für mehr als eine Messung ergibt sich ein Gleichungssystem der Form *Mx = v* mit einem zu bestimmenden Vektor x, einer Matrix *M* und einem Vektor v (siehe Gleichung 9), das sich für mindestens drei Bild-Korrespondenzen als Stützstellen durch z.B. eine Singular Value Decomposition (Singulärwertzerlegung der Matrix) oder ein Least-Square-Verfahren lösen lässt:

$$\begin{bmatrix} x_0 c - a \\ y_0 c - b \\ \vdots \end{bmatrix} = \begin{bmatrix} -y_1 & 0 & y_1 x_0 \\ 0 & -y_1 & y_1 y_0 \\ & \vdots & \end{bmatrix} * \begin{bmatrix} t_x \\ t_y \\ t_z \end{bmatrix} \quad (9)$$

Die Herleitung der Back- und Side-Plane-Homographien erfolgt analog und ergibt:

$$\begin{bmatrix} x_0 c - a \\ y_0 c - b \\ \vdots \end{bmatrix} = \begin{bmatrix} -x_1 & 0 & x_1 x_0 \\ 0 & -x_1 & x_1 y_0 \\ & \vdots & \end{bmatrix} \begin{bmatrix} t_x \\ t_y \\ t_z \end{bmatrix} \quad (10)$$

$$bzw. \begin{bmatrix} x_0 c - a \\ y_0 c - b \\ \vdots \end{bmatrix} = \begin{bmatrix} -1 & 0 & x_0 \\ 0 & -1 & y_0 \\ & \vdots & \end{bmatrix} \begin{bmatrix} t_x \\ t_y \\ t_z \end{bmatrix}. \quad (11)$$

Um größere, aus mehreren Zellen bestehende Objekte zu segmentieren, lassen sich in einem weiteren Schritt benachbarte Zellen zusammenfassen, indem die Rückprojektionsfehler $\sum x_{t0}^i - H_j x_{t1}^i$ bzw. $\sum x_{t0}^j - H_i x_{t1}^j$ über Stützstellen (siehe unten Punkt 1. : RANSAC) der benachbarten Segmente j und i und deren Homographien berechnet werden. Zwei benachbarte Cluster werden zusammengefasst, falls $\sum x_{t0}^i - H_j x_{t1}^i$ kleiner $\sum x_{t0}^i - H_i x_{t1}^i$ ist oder z.B. der auf die prädizierte Flusslänge normierte Rückprojektionsfehler unter einer einstellbaren Schwelle liegt. Insbesondere können zwei benachbarte Cluster zusammengefasst werden, falls $\sum x_{t0}^i - H_j x_{t1}^i$ kleiner $\sum x_{t0}^i - H_i x_{t1}^i$ ist und die beiden Rückprojektionsfehler $\sum x_{t0}^i - H_j x_{t1}^i$ und $\sum x_{t0}^i - H_i x_{t1}^i$ eine auf die Flusslänge normierte Schwelle unterschreiten. Alternativ lassen sich Rückprojektionsfehler als Potentiale in einem Graph verwenden und eine globale Lösung berechnen. Die Kompaktheit der Cluster lässt sich hierbei über die Kantenpotentiale im Graphen bestimmen.

Wurden die Segmente zusammengefasst, werden die Homographien neu berechnet und die Punkt-Korrespondenzen den Clustern mit geringstem Rückprojektionsfehler zugeordnet. Betrachtet man nur direkt angrenzende Cluster, lassen sich sehr kompakte Objekte generieren. Überschreitet der minimale Fehler eine einstellbare Schwelle, werden den Korrespondenzen neue (Cluster-/Objekt-) IDs zugewiesen, um teilverdeckte Objekte oder Objekte mit leicht unterschiedlicher TTC erkennen zu können. Durch die Einstellung der Schwelle kann die Auflösung (leicht) unterschiedlicher Objekte angepasst werden.

Die Rückprojektionsfehler lassen sich mit einem Bias versehen, der Kosten für zusammenhängende Bereiche reduziert oder einem Bias, der die Kosten für einen ID-Wechsel erhöht, falls Punkt-Korrespondenzen über eine längere Zeit dieselbe ID-Zugehörigkeit hatten.

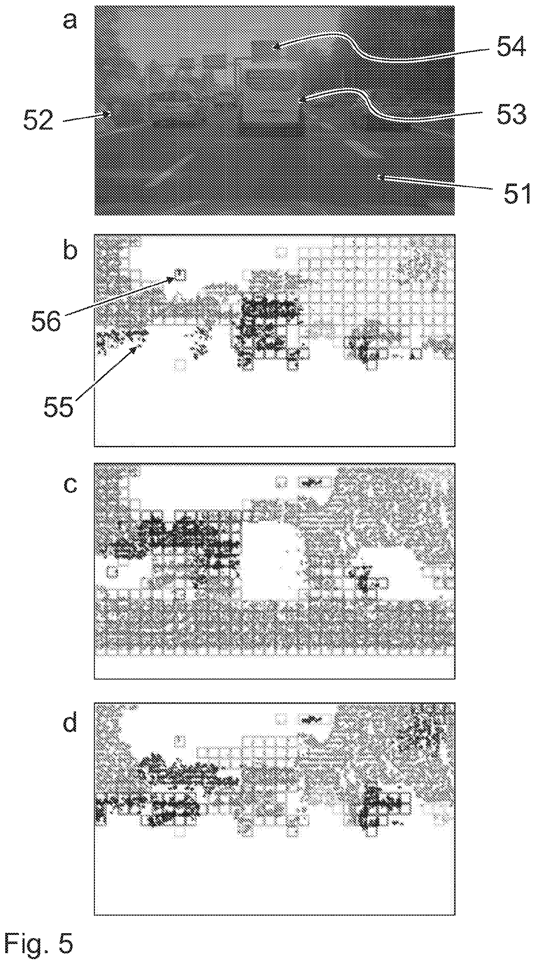

Fig. 5 zeigt ein Beispiel einer Szenensegmentierung:
Fig. 5a zeigt ein Bild, das von einer Fahrzeugkamera aufgenommen wurde, die im Inneren des Fahrzeugs angeordnet ist und die vorausliegende Umgebung durch die Windschutzscheibe erfasst. Zu sehen ist eine dreispurige Fahrbahn (51), z.B. eine Autobahn. Die Fahrspuren sind durch entsprechende Fahrspurmarkierungen getrennt. Auf allen drei Fahrspuren fahren Fahrzeuge. Das auf der eigenen Fahrspur vorausfahrende Fahrzeug (53) verdeckt möglicherweise weitere auf der eigenen Fahrspur befindliche vorausfahrende Fahrzeuge. Links der dreispurigen Fahrbahn befindet sich eine bauliche erhabene Begrenzung (52) zur Gegenfahrbahn. Rechts der dreispurigen Fahrbahn (51) befindet sich ein Rand- bzw. Standstreifen, der nach rechts von einer Leitplanke begrenzt wird, hinter der sich ein Waldgebiet anschließt. In einiger Entfernung vor dem eigenen Fahrzeug sind Schilderbrücken (54) zu erkennen, von denen eine die dreispurige Fahrbahn (51) überspannt.

Analog dem anhand von Fig. 4 beschriebenen Verfahren, kann diese Szene segmentiert werden. In Fig. 5b bis 5d sind Zellen (56) zu erkennen. In den Zellen sind Punktkorrespondenzen (55) dargestellt. Die Zuordnung einer Zelle (56) zu einem Segment ist über die Farbe des Zellrahmens bzw. der Punktkorrespondenzen (55) dargestellt.

Fig. 5b zeigt den roten Kanal des segmentierten Bildes,

Fig. 5c den grünen Kanal und Fig. 5d den blauen Kanal.

Unterschiedliche Segmente wurden mit unterschiedlichen Farben versehen. Ein Segment, welches im Original grün ist, erstreckt sich über die untersten fünf bis sechs Zeilen (in Fig. 5b und 5d entsprechend weiss dargestellt und ohne Zellrahmen). Dieses Segment entspricht der Bodenebene, also der Oberfläche der Fahrbahn (51), auf der das eigene Auto fährt.

Ein weiteres Segment ist in der Mitte des Bildes zu erkennen, im Original ist es pink. Daher weist es in Fig. 5b hohe Rotwerte auf, in Fig. 5d schwächere Blauwerte und in Fig. 5c keine Grünwerte. Dieses Segment entspricht der Rückwandebene des auf der eigenen Fahrspur vorausfahrenden (Transporter-) Fahrzeugs (53).

Das gezeigte Segmentierungsergebnis wurde ohne Vorwissen über die Szene in nur drei Iterationsschritten ermittelt. Das zeigt die enorme Schnelligkeit und Leistungsfähigkeit einer Ausführungsform der Erfindung durch zeitliche Integration.

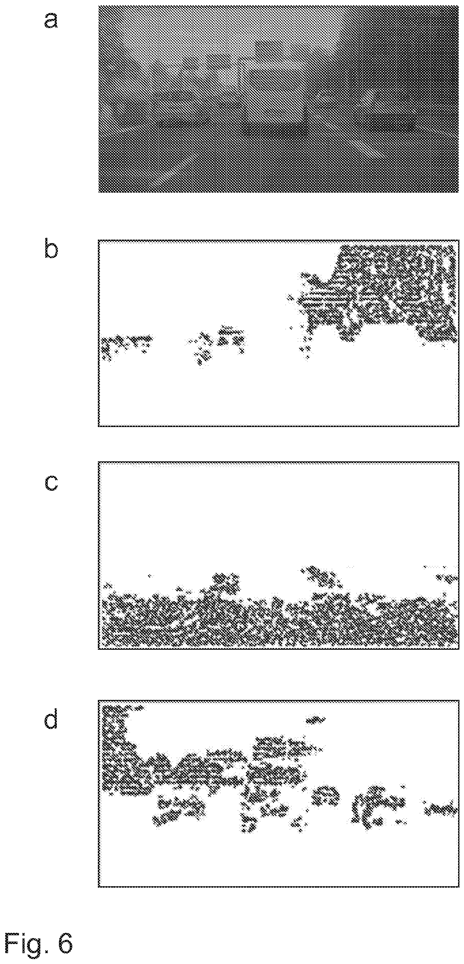

Fig. 6 zeigt eine Ermittlung der Orientierung von Ebenen in der bereits bei Fig. 5 beschriebenen Szene. Fig. 6a zeigt zur Orientierung nochmals die Umgebungssituation gemäß Fig. 5a. Sämtliche Korrespondenzen, die einer Seitenwandebene zugeordnet zeigt Fig. 6b. Die Korrespondenzen am linken Rand wurden einer rechten Seitenwandebene zugeordnet, was zutreffend ist, da dort im Bild die rechte Seite der baulichen Begrenzung (52) zur Gegenfahrbahn befindlich ist. Die Korrespondenzen in der rechten Bildhälfte wurden linken Seitenwandebenen zugeordnet, was ebenfalls zutreffend ist, da dort die "linke Seite" der Fahrbahnrandbebauung bzw. -bepflanzung im Bild befindlich ist. Fig. 6c zeigt, welche Korrespondenzen einer Bodenebene zugeordnet werden, was zutreffend ist, da dort im Bild die Oberfläche der Fahrbahn (51) zu sehen ist.

Fig. 6d zeigt, welche Korrespondenzen einer Rückwandebene zugeordnet werden. Das ist weitestgehend zutreffend. Aus dieser Ermittlung alleine können unterschiedliche Rückwandebenen noch nicht hinreichend unterschieden werden, z.B. die von dem auf derselben Fahrspur vorausfahrenden Lieferwagen (53) von den im Bild darüber angeordneten Schildern der Schilderbrücke (54). Dieser Darstellung können aber bereits wichtige Hinweise entnommen werden, wo erhabene Objekte in der Umgebung des Fahrzeugs auftreten.

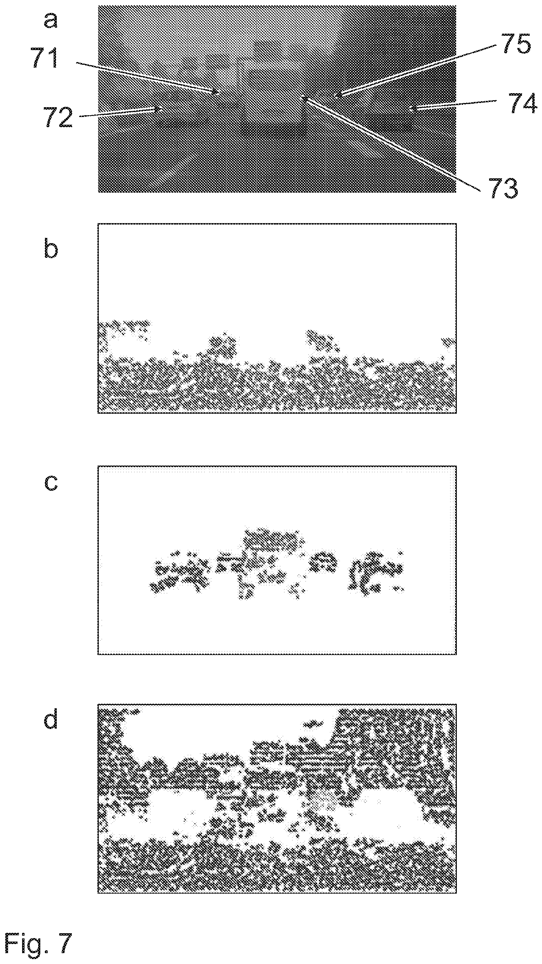

Wie in Fig. 7 veranschaulicht wird, kann zur Erkennung dynamischer Objekte die inverse TTC ($t_x$, $t_y$, $t_z$) verwendet werden.

Fig. 7a zeigt wiederum das Bild der Fahrzeugsituation (identisch mit Fig. 6a). Das auf der eigenen Fahrspur vorausfahrende Fahrzeug (73) ist ein Lieferwagen. Auf der linken Spur fahren zwei Fahrzeuge (71 und 72) und auf der rechten Spur zwei weitere Fahrzeuge (74 und 75).

Fig. 7b zeigt Korrespondenzen, die wiederum der Bodenebene entsprechen (im Original violett) und als einzige einen Rotanteil aufweisen.

Fig. 7c zeigt Korrespondenzen, die bewegten Objekten zugeordnet werden. Diese sind im Original grün, wenn sie sich vom eigenen Fahrzeug entfernen (also schneller fahren) bzw. türkis, wenn sie langsamer fahren.

Fig. 7d zeigt Korrespondenzen mit Blauanteil, also solche, die der Bodenebene entsprechen (vgl. Fig. 7b), bewegte Objekte, die sich dem eigenen Fahrzeug nähern (vgl. Fig. 7c) und solche, die statischen erhabenen Objekten entsprechen, diese sind nur in Fig. 7d dargestellt, wie z.B. Waldbereiche links und rechts der Autobahn und die Schilderbrücken. Aus Fig. 7c und 7d gemeinsam, ist zu erkennen, dass sich das Fahrzeug auf der eigenen Fahrspur (73) nähert. Dasselbe gilt für das vordere Fahrzeug auf der rechten Fahrspur (75). Dagegen entfernen sich die übrigen Fahrzeuge (71, 72 und 74).

Der Bereich, der im Bild dem Himmel entspricht, führt mangels Struktur im Bild zu keinen Korrespondenzen (weiß in Fig. 7b bis 7d) .

Wird die Eigenrotation in den Korrespondenzen vor der Berechnung der Homographie berücksichtigt, bzw. wird die Eigenrotation in der Rotationsmatrix R berücksichtigt, lassen sich überholende Fahrzeuge aufgrund Ihrer negativen $t_z$ Komponente erkennen bzw. ausscherende oder in einer Kurve fahrende Fahrzeuge durch eine laterale $t_x$ Komponente ungleich Null erkennen. Werden die dynamischen Segmente über ihre Homographien prädiziert (siehe unten "Verdichtung des optischen Flusses basierend auf Homographien "), kann über die Zeit eine dynamische Karte aufgebaut werden.

Betrachtet man Gleichung 3, erkennt man, dass Segmente mit einer inversen TTC gleich Null die Rotationsmatrix beschreiben und man kann sie durch Berechnung einer Homographie mit vollen Freiheitsgrad (Gleichung 2) aus Segmenten mit $t/d$ gleich Null bestimmen. Geht man davon aus, dass sich die translatorische Komponenten in der Nähe des Epipols nicht bemerkbar machen, kann man die Pitch- und Gierrate auch bestimmen, indem die Koordinaten des Epipols (x, , $y_e$) durch die Homographie statischer Segmente prädiziert werden und der *atan* (($x_{e0}$ - $x_{e1}$)/$f$) bzw. *atan* (($y_{e0}$ - $y_{e1}$)/$f$) mit der auf einen Pixel bezogenen Brennweite $f$ berechnet wird.

Wird für jedes Cluster eine Homographie mit allen Freiheitsgraden berechnet, können diese auch zur Rekonstruktion der 3D-Umgebung verwendet werden, indem anstelle der gemessenen Position $x_{f0}$, die prädizierte Position $H^*x_{f1}$ zur Triangulation verwendet wird. Dies reduziert nicht nur den Einfluss von Messfehlern, sondern ermöglicht es auch Objekte nahe des Epipols zu rekonstruieren.

Im Folgenden wird ein Ausführungsbeispiel zur Verdichtung des optischen Flusses basierend auf Homographien beschrieben.

Ist die Segmentierung zum Zeitpunkt t-1 bekannt, kann sie sowohl zur Prädiktion der Objekte als auch zur Generierung eines dichten Flussfeldes verwendet werden. Signaturbasierte Flussverfahren erzeugen Signaturen und versuchen diese in aufeinanderfolgenden Frames eindeutig zuzuordnen. Meist werden die Signaturen aus einem Patch (Bildausschnitt bzw. Bildbereich) definierter Größe berechnet. Verändern sich jedoch Größe und Form eines Patches, ist eine Korrespondenzfindung mit einem festen Template (Vorlage, Muster, gemeint ist z.B. ein Bildausschnitt eines Bildes der Bildfolge, der einem Objekt entspricht - beispielsweise ein Fahrzeug-Template) nicht mehr möglich. Wenn man sich z.B. einer Back-Plane annähert, verändert sich die Größe eines Patches. Oder wenn man sich über einer Ground-Plane oder parallel zu einer Side-Plane bewegt, verändern sich sowohl Größe als auch Form eines Patches, siehe Fig. 1 und 2). Ist die Segmentierung zum Zeitpunkt t-1 vorhanden, können die Homographien über bereits gefunden Flussvektoren neu berechnet und dazu verwendet werden die Position und Form bereits etablierter Korrespondenzen von t-1 auf t-0 zu prädizieren.

Alternativ lässt sich der aktuelle Frame zum Zeitpunkt t-0 auf den Zeitpunkt t-1 transformieren, um Skalen- und Formänderungen zu kompensieren.

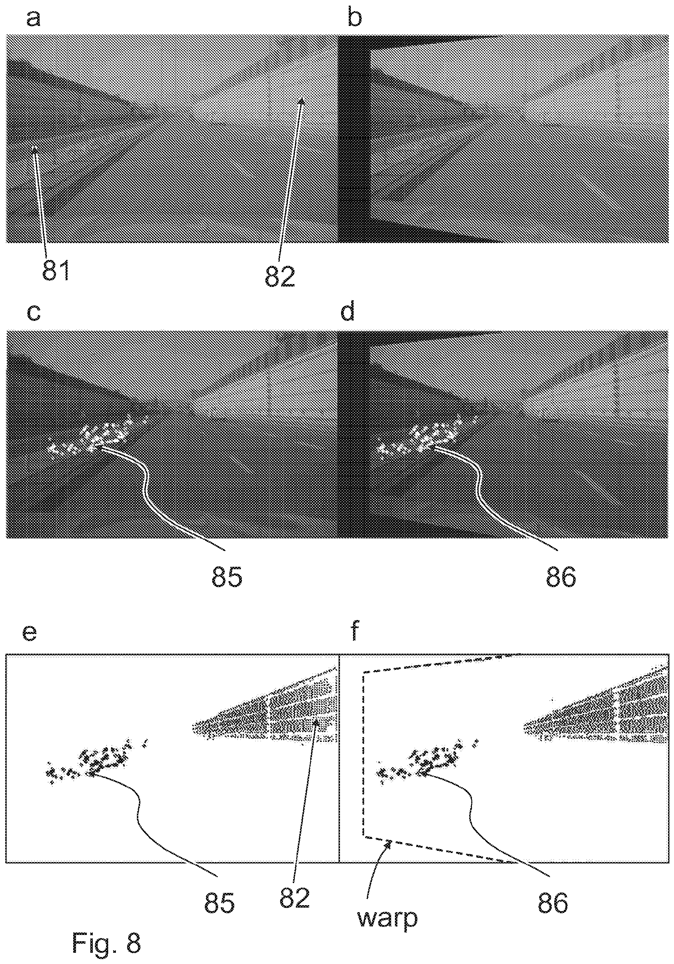

Fig. 8 veranschaulicht ein solches Vorgehen.

Fig. 8a zeigt ein Bild einer anderen Fahrsituation, das von der Fahrzeugkamera zu einem Zeitpunkt t-1 aufgenommen wurde. Zu sehen ist eine Autobahn mit drei Fahrspuren je Fahrtrichtung. Links der eigenen dreispurigen Fahrbahn befindet sich eine Leitplanke (81) als erhabene Begrenzung zur Gegenfahrbahn. Rechts der Fahrbahn befindet sich eine Lärmschutzwand (82).

Fig. 8b zeigt ein Bild, das zum darauffolgenden Zeitpunkt t aufgenommen wurde und über die Homographie der Leitplanke derart transformiert ("gewarpt", englisch: to warp) wurde, dass die infolge der Bewegung des Fahrzeuges und damit der Fahrzeugkamera zwischen den beiden Aufnahmezeitpunkten auftretenden Änderungen im Bild im Bereich der Leitplanke kompensiert werden. Die Vorwärtsbewegung des eigenen Fahrzeugs führt in Fig. 8b dazu, dass der naheliegendste Teilstrich der Fahrspurmarkierung näher am eigenen Fahrzeug ist als in Fig. 8a. Die Transformation führt zu der trapezförmigen Versetzung des Bildes, welche in Fig. 8f durch eine gestrichelte Linie veranschaulicht ist.

Fig. 8c zeigt nun korrespondierende Merkmale (85), die im Bereich der Leitplanke (81, vgl. Fig. 8a) ermittelt wurden, als weiße Punkte.

Fig. 8d zeigt, wo diese korrespondierenden Merkmale im nächsten Bild zu erwarten sind (86), nachdem dieses wie zu Fig. 8b beschrieben transformiert worden ist.

In Fig. 8e und 8f ist dieser Sachverhalt nochmals in einer schwarz-weiß Darstellung gezeigt, wobei die korrespondierenden Merkmale (85) nun den schwarzen Punkten auf der Leitplanke (81) in der linken Bildhälfte entsprechen.

Zur Generierung eines dichten Flussfeldes kann also für jedes Segment das aktuelle Bild auf das vorherige Bild gewarpt werden, um bereits bestehende Korrespondenzen, die sich in ihrer Skale oder Form veränderte haben, wieder zu finden bzw. um neue Korrespondenzen mittels deckungsgleicher Templates zu etablieren.

Sind in einem aktuellen Frame nicht genügend Flussvektoren zur Neuberechnung einer Homographie vorhanden, lassen sich näherungsweise die Homographie aus dem letzten Frame verwenden um die Korrespondenzfindung robuster gegen Form und Skalenänderungen zu gestalten.

Folgende Ausgestaltungsformen bzw. -aspekte sind vorteilhaft und können einzeln oder in Kombination vorgesehen werden:

1. Das Bild wird in NxM Zellen unterteilt und den Punkt-Korrespondenzen einer Zelle wird eine eindeutige Zellen-ID zugewiesen. Aus den Korrespondenzen mit gleichen IDs werden mittels RANSAC die Back-/Ground- und Side-Plane-Homographien (Gleichung 9, 10 und 10) berechnet und sowohl die Homographie mit dem geringsten Rückprojektionsfehler, als auch die zur Berechnung der Homographie verwendeten Stützstellen gespeichert. Bei RANSAC (RAndom SAmple Consensus) Verfahren wird üblicherweise bei jeder Iteration eine minimale Anzahl an zufällig ausgewählten Korrespondenzen verwendet, um eine Hypothese zu bilden. Für jedes korrespondierende Merkmal wird anschließend ein Wert berechnet, der beschreibt, ob das korrespondierende Merkmal die Hypothese unterstützt. Wenn die Hypothese eine hinreichende Unterstützung durch die korrespondierenden Merkmale erreicht, können die nicht-unterstützenden korrespondierende Merkmale als Ausreißer verworfen werden. Andernfalls wird erneut eine minimale Anzahl an Korrespondenzen zufällig ausgewählt.

2. Für benachbarte Zellen $i$, $j$ werden die Rückprojektionsfehler $\sum x_{t0}^i - H_j x_{t1}^i$ bzw. $\sum x_{t0}^j - H_i x_{t1}^j$ über die Stützstellen der benachbarten Homographie berechnet. Ist der Rückprojektionsfehler $\sum x_{t0}^i - H_j x_{t1}^i$ kleiner $\sum x_{t0}^i - H_i x_{t1}^i$ bzw. unterschreiten die Fehler eine auf die Flusslänge normierte Schwelle, werden die IDs zusammengefasst und die Homographien neu berechnet. Insbesondere können zwei benachbarte Zellen als zur selben Ebene (bzw. zum selben Segment oder zum selben Objekt) zugehörig geclustert werden, wenn der Rückprojektionsfehler $\sum_i (x_{t0}^i - H_j x_{t1}^i)$ kleiner als $\sum_i (x_{t0}^i - H_i x_{t1}^i)$ ist und wenn beide Rückprojektionsfehler $\sum_i (x_{t0}^i - H_j x_{t1}^i)$ und $\sum_i (x_{t0}^i - H_i x_{t1}^i)$ eine auf die Flusslänge normierte Schwelle unterschreiten.

3. Die Rückprojektionsfehler $x_{t0} - H_j x_{t1}$ sämtlicher Punkt-Korrespondenzen werden für die angrenzenden Segmente berechnet und eine Punkt-Korrespondenz wird dem Segment mit geringstem Rückprojektionsfehler zugeordnet. Über schreitet der minimale Fehler eine Schwelle, werden die Korrespondenzen mit einer neuen Objekt ID versehen um auch kleinere bzw. teilverdeckte Objekte erkennen zu können.

4. Die Homographien der zum Zeitpunkt t-1 extrahierten Segmente werden zu Beginn eines neuen Frames (t-0) über die bereits gefunden Bild-Korrespondenzen neu berechnet und die bereits bestehenden Segment IDs in den aktuellen Frame prädiziert. Sind im aktuellen Frame nicht genügend Flussvektoren zur Neuberechnung einer Homographie vorhanden, lassen sich näherungsweise die Homographien aus dem letzten Frame verwenden.

5. Zur Generierung eines dichten Flussfeldes wird für jedes Segment der aktuelle Frame (t-0) auf den letzten Frame (t-1) gewarpt, um bereits bestehende Korrespondenzen, die sich in ihrer Skale oder Form veränderte haben, wieder zu finden bzw. um neue Korrespondenzen zu etablieren.

6. Die Rückprojektionsfehler der Back-/Ground- und Side-Plane können zur Validierung erhabener Ziele verwendet werden, siehe Fig. 6.

7. Ist z.B. bei einer Fahrzeugstereokamera eine Disparitätskarte vorhanden, können die absoluten Geschwindigkeiten aus der inversen TTC $t/d$ berechnet werden, da dann die absoluten Entfernungen d für einzelne Pixel in der Disparitätskarte vorliegen.

8. Wird für jedes Segment eine vollständige Homographie mit allen Freiheitsgraden berechnet, kann aus Segmenten mit einer TTC nahe unendlich (bzw. inverse TTCs annähernd Null) die Rotationsmatrix R bestimmt werden.

9. Die 3D-Umgebung kann aus der prädizierten Position ($Hx_{t1}$, $x_{t1}$) anstelle der gemessenen Position ($x_{t0}$, $x_{t1}$) rekonstruiert werden und erlaubt es, auch Objekte am Epipol zu rekonstruieren.

**Patentansprüche**

1.  Verfahren zur Detektion von Objekten aus einer Folge von Bildern einer Fahrzeugkamera umfassend die Schritte:

    a) Aufnahme einer Folge von Bildern mit der Fahrzeugkamera
    b) Ermittlung von korrespondierenden Merkmalen in zwei aufeinander folgenden Bildern,
    c) Berechnung von Homographien für benachbarte korrespondierende Merkmale zur Bestimmung einer Mehrzahl von Ebenen und zur Zuordnung zu jeweils einer Ebene im Raum,
    d) Bestimmung der Mehrzahl von Ebenen im Raum durch eine Zuordnung von benachbarten korrespondierenden Merkmalen zu einer Ebene im Raum, wobei als mögliche Raumebenen vorgegeben sind: eine Rückwandebene, die normal zur Fahrzeuglängsrichtung verläuft, eine Seitenwandebene, die normal zur lateralen Richtung verläuft und eine Bodenebene, die normal zur vertikalen Richtung verläuft,
    e) Segmentierung der korrespondierenden Merkmale anhand der berechneten Homographien,und
    f) Detektion von Objekten unter Berücksichtigung der in Schritt d) bestimmten Ebenen und der gemäß Schritt e) segmentierten Merkmale.

2.  Verfahren nach Anspruch 1, wobei in Schritt a) die Bildfolge ein erstes Bild umfasst, das zu einem ersten Zeitpunkt aufgenommen wird, und ein zweites Bild, das zu einem späteren Zeitpunkt als das erste Bild aufgenommen wird und in Schritt b) jedes der korrespondierenden Merkmale eine Entsprechung eines ersten Merkmals in einem ersten Bild zu demselben Merkmal in einem zweiten Bild umfasst.

3.  Verfahren nach einem der vorhergehenden Ansprüche, wobei die mindestens eine Rückwandebene berechnet wird nach

$$\begin{bmatrix} x_0c - a \\ y_0c - b \\ \vdots \end{bmatrix} = \begin{bmatrix} -x_1 & 0 & x_1x_0 \\ 0 & -x_1 & x_1y_0 \\ & \vdots & \end{bmatrix} \begin{bmatrix} t_x \\ t_y \\ t_z \end{bmatrix}$$

    wobei a, b, c Konstanten sind, $x_0$, $y_0$, $x_1$, $y_1$ Korrespondenzen im ersten Bild (Index 0) und zweiten Bild (Index 1) und $t_x$, $t_y$, $t_z$, die Komponenten des Vektors t/d sind. t beschreibt die Translation der Fahrzeugkamera und d die Entfernung zu einer Ebene.

4.  Verfahren nach einem der vorhergehenden Ansprüche, wobei die mindestens eine Bodenebene berechnet wird nach

$$\begin{bmatrix} x_0c - a \\ y_0c - b \\ \vdots \end{bmatrix} = \begin{bmatrix} -y_1 & 0 & y_1x_0 \\ 0 & -y_1 & y_1y_0 \\ & \vdots & \end{bmatrix} * \begin{bmatrix} t_x \\ t_y \\ t_z \end{bmatrix}$$

5.  Verfahren nach einem der vorhergehenden Ansprüche, wobei die mindestens eine Seitenwandebene berechnet wird nach

$$\begin{bmatrix} x_0c - a \\ y_0c - b \\ \vdots \end{bmatrix} = \begin{bmatrix} -1 & 0 & x_0 \\ 0 & -1 & y_0 \\ & \vdots & \end{bmatrix} \begin{bmatrix} t_x \\ t_y \\ t_z \end{bmatrix}$$

**6.** Verfahren nach einem der vorhergehenden Ansprüche, wobei falls mehrere Ebenen mit identischer Orientierung auftreten, die Ebenen mit identischer Orientierung anhand der zugehörigen $t_x$, $t_y$, $t_z$-Werte getrennt werden.

**7.** Verfahren nach einem der Ansprüche 1 bis 6, wobei ein Bild durch ein Gitter in gleichartige Zellen unterteilt wird, und

für jede Zelle aus den darin ermittelten korrespondierenden Merkmalen eine Homographie berechnet wird, und wobei Zellen mit übereinstimmender Homographie geclustert werden.

**8.** Verfahren nach Anspruch 7, wobei falls die berechnete Homographie einer ersten Zelle nicht hinreichend mit einer Homographie einer benachbarten Zelle übereinstimmt, ein Rückprojektionsfehler eines korrespondierenden Merkmals in der ersten Zelle mit den Rückprojektionsfehlern der Homographien der benachbarten Zellen verglichen wird und dieses korrespondierende Merkmal der Homographie mit dem geringstem Fehler zugewiesen wird, so dass eine Clustergrenze innerhalb der ersten Zelle ermittelt werden kann.

**9.** Verfahren nach einem der vorhergehenden Ansprüche, wobei die Zuordnung von Ebenen zu benachbarten korrespondierenden Merkmalen im Wesentlichen im gesamten Bild der Fahrzeugkamera ermittelt wird.

**10.** Verfahren nach einem der vorhergehenden Ansprüche, wobei die Fahrzeugkamera eine monokulare Kamera ist.

**11.** Verfahren nach einem der vorhergehenden Ansprüche, wobei aus einer Rückwandebene und/oder einer Seitenwandebene eine Objekthypothese für ein erhabenes Objekt generiert wird.

**12.** Vorrichtung zur Detektion von Objekten aus einer Folge von Bildern einer Fahrzeugkamera umfassend:

ein Kamerasteuergerät, welches dazu ausgebildet ist,

a) eine Folge von Bildern mit der Fahrzeugkamera aufzunehmen;

und eine Auswerteelektronik, welche dazu ausgebildet ist,

b) korrespondierende Merkmale in zwei aufeinander folgenden Bildern zu ermitteln,
c) Homographien für benachbarte korrespondierende Merkmale zur Bestimmung einer Mehrzahl von Ebenen und zur Zuordnung zu jeweils einer Ebene im Raum zu berechnen,
d) die Mehrzahl von Ebenen im Raum durch eine Zuordnung von benachbarten korrespondierenden Merkmalen zu einer Ebene im Raum zu bestimmen, wobei als mögliche Raumebenen vorgegeben sind: eine Rückwandebene, die normal zur Fahrzeuglängsrichtung verläuft, eine Seitenwandebene, die normal zur lateralen Richtung verläuft und eine Bodenebene, die normal zur vertikalen Richtung verläuft,
e) korrespondierende Merkmale anhand der berechneten Homographien zu segmentieren, und
f) ein oder mehrere Objekte zu detektieren unter Berücksichtigung der bestimmten Ebenen und segmentierten Merkmale.

**Claims**

**1.** Method for detecting objects from a sequence of images from a vehicle camera, comprising the steps of:

a) recording a sequence of images using the vehicle camera,
b) ascertaining corresponding features in two consecutive images,
c) calculating homographies for neighbouring corresponding features for the determination of a plurality of planes and for assignment to in each case one plane in space,
d) determining the plurality of planes in space by assigning neighbouring corresponding features to a plane in space, wherein the possible spatial planes specified are: a rear wall plane extending normally to the vehicle longitudinal direction, a side wall plane extending normally to the lateral direction, and a bottom plane extending normally to the vertical direction,
e) segmenting the corresponding features on the basis of the calculated homographies, and
f) detecting objects taking into account the planes determined in step d) and the features segmented according to step e).

**2.** Method according to Claim 1, wherein in step a), the image sequence

comprises a first image recorded at a first time and a second image recorded at a later time than the first image, and

in step b), each of the corresponding features comprises a correspondence of a first feature in a first image to the same feature in a second image.

**3.** Method according to either of the preceding claims, wherein the at least one rear wall plane is calculated according to

$$\begin{bmatrix} x_0c - a \\ y_0c - b \\ \vdots \end{bmatrix} = \begin{bmatrix} -x_1 & 0 & x_1x_0 \\ 0 & -x_1 & x_1y_0 \\ & \vdots & \end{bmatrix} \begin{bmatrix} t_x \\ t_y \\ t_z \end{bmatrix}$$

where a, b, c are constants, $x_0$, $y_0$, $x_1$, $y_1$ are correspondences in the first image (index 0) and second image (index 1), and $t_x$, $t_y$, $t_z$ are the components of the vector $t$/d; $t$ describes the translation of the vehicle camera and d the distance from a plane.

**4.** Method according to any of the preceding claims, wherein the at least one bottom plane is calculated according to

$$\begin{bmatrix} x_0c - a \\ y_0c - b \\ \vdots \end{bmatrix} = \begin{bmatrix} -y_1 & 0 & y_1x_0 \\ 0 & -y_1 & y_1y_0 \\ & \vdots & \end{bmatrix} * \begin{bmatrix} t_x \\ t_y \\ t_z \end{bmatrix}$$

**5.** Method according to any of the preceding claims, wherein the at least one side wall plane is calculated according to

$$\begin{bmatrix} x_0c - a \\ y_0c - b \\ \vdots \end{bmatrix} = \begin{bmatrix} -1 & 0 & x_0 \\ 0 & -1 & y_0 \\ & \vdots & \end{bmatrix} \begin{bmatrix} t_x \\ t_y \\ t_z \end{bmatrix}$$

**6.** Method according to any of the preceding claims, wherein, if a plurality of planes with identical orientation occur, the planes with identical orientation are separated on the basis of the associated $t_x$, $t_y$, $t_z$ values.

**7.** Method according to any of Claims 1 to 6, wherein an image is divided by a grid into cells of the same type, and

a homography is calculated for each cell from the corresponding features ascertained therein, and wherein cells having matching homography are clustered.

**8.** Method according to Claim 7, wherein, if the calculated homography of a first cell does not sufficiently match a homography of a neighbouring cell, a back-projection error of a corresponding feature in the first cell is compared with the back-projection errors of the homographies of the neighbouring cells, and this corresponding feature is assigned to the homography having the lowest error, with the result that a cluster boundary within the first cell can be ascertained.

**9.** Method according to any of the preceding claims, wherein the assignment of planes to neighbouring corresponding features is ascertained substantially in the entire image from the vehicle camera.

**10.** Method according to any of the preceding claims, wherein the vehicle camera is a monocular camera.

**11.** Method according to any of the preceding claims, wherein an object hypothesis for a raised object is generated from a rear wall plane and/or a side wall plane.

**12.** Apparatus for detecting objects from a sequence of images from a vehicle camera, comprising:

a camera controller, which is configured for

a) recording a sequence of images using the vehicle camera,

and an evaluation electronic system, which is configured for

b) ascertaining corresponding features in two consecutive images,
c) calculating homographies for neighbouring corresponding features for the determination of a plurality of planes and for assignment to in each case one plane in space,
d) determining the plurality of planes in space by assigning neighbouring corresponding features to a plane in space, wherein the possible spatial planes specified are: a rear wall plane extending normally to the vehicle longitudinal direction, a side wall plane extending normally to the lateral direction, and a bottom plane extending normally to the vertical direction,
e) segmenting corresponding features on the basis of the calculated homographies, and
f) detecting one or more objects taking into account the determined planes and segmented features.

**Revendications**

1. Procédé de détection d'objets à partir d'une suite d'images d'une caméra de véhicule, comprenant les étapes suivantes :

    a) la prise d'une suite d'images avec la caméra de véhicule,
    b) la détermination de caractéristiques correspondantes dans deux images successives,
    c) le calcul d'homographies pour des caractéristiques correspondantes adjacentes afin de déterminer une pluralité de plans et de les affecter respectivement à un plan dans l'espace,
    d) la détermination de la pluralité de plans dans l'espace par affectation de caractéristiques correspondantes adjacentes à un plan dans l'espace, dans lequel sont prédéfinis comme plans possibles de l'espace : un plan de paroi arrière qui s'étend perpendiculairement à la direction longitudinale du véhicule, un plan de paroi latérale qui s'étend perpendiculairement à la direction latérale et un plan de sol qui s'étend perpendiculairement à la direction verticale,
    e) la segmentation des caractéristiques correspondantes sur la base des homographies calculées, et
    f) la détection d'objets en tenant compte des plans déterminés à l'étape d) et des caractéristiques segmentées selon l'étape e).

2. Procédé selon la revendication 1, dans lequel, à l'étape a), la suite d'images comprend une première image prise à un premier instant, et une deuxième image prise à un instant ultérieur à la première image, et à l'étape b), chacune des caractéristiques correspondantes comprend une correspondance entre une première caractéristique dans une première image et la même caractéristique dans une deuxième image.

3. Procédé selon l'une quelconque des revendications précédentes, dans lequel ledit au moins un plan de paroi arrière est calculé conformément à

$$\begin{bmatrix} x_0 c - a \\ y_0 c - b \\ \vdots \end{bmatrix} = \begin{bmatrix} -x_1 & 0 & x_1 x_0 \\ 0 & -x_1 & x_1 y_0 \\ & \vdots & \end{bmatrix} \begin{bmatrix} t_x \\ t_y \\ t_z \end{bmatrix}$$

où a, b, c sont des constantes, $x_0$, $y_0$, $x_1$, $y_1$ sont des correspondances dans la première image (indice 0) et la deuxième image (indice 1) et $t_x$, $t_y$, $t_z$ sont les composantes du vecteur t1d, où t décrit la translation de la caméra de véhicule et d la distance par rapport à un plan.

4. Procédé selon l'une quelconque des revendications précédentes, dans lequel ledit au moins un plan de sol est calculé conformément à

$$\begin{bmatrix} x_0 c - a \\ y_0 c - b \\ \vdots \end{bmatrix} = \begin{bmatrix} -y_1 & 0 & y_1 x_0 \\ 0 & -y_1 & y_1 y_0 \\ & \vdots & \end{bmatrix} * \begin{bmatrix} t_x \\ t_y \\ t_z \end{bmatrix}$$

**5.** Procédé selon l'une quelconque des revendications précédentes, dans lequel ledit au moins un plan de paroi latérale est calculé conformément à

$$\begin{bmatrix} x_0 c - a \\ y_0 c - b \\ \vdots \end{bmatrix} = \begin{bmatrix} -1 & 0 & x_0 \\ 0 & -1 & y_0 \\ & \vdots & \end{bmatrix} \begin{bmatrix} t_x \\ t_y \\ t_z \end{bmatrix}$$

**6.** Procédé selon l'une quelconque des revendications précédentes, dans lequel, dans le cas où plusieurs plans ayant des orientations identiques apparaissent, les plans ayant des orientations identiques sont séparés sur la base des valeurs $t_x$, $t_y$, $t_z$ associées.

**7.** Procédé selon l'une quelconque des revendications 1 à 6, dans lequel une image est divisée en cellules de même type par une grille, et

pour chaque cellule, une homographie est calculée à partir des caractéristiques correspondantes déterminées dans celle-ci, et
dans lequel les cellules ayant une homographie concordante sont regroupées.

**8.** Procédé selon la revendication 7, dans lequel, dans le cas où l'homographie calculée d'une première cellule ne concorde pas suffisamment avec une homographie d'une cellule adjacente, une erreur de rétroprojection d'une caractéristique correspondante dans la première cellule est comparée aux erreurs de rétroprojection des homographies des cellules adjacentes et cette caractéristique correspondante est attribuée à l'homographie présentant la plus petite erreur, de sorte qu'une limite de cluster peut être déterminée à l'intérieur de la première cellule.

**9.** Procédé selon l'une quelconque des revendications précédentes, dans lequel l'affectation de plans à des caractéristiques correspondantes adjacentes est déterminée sensiblement dans la totalité de l'image de la caméra de véhicule.

**10.** Procédé selon l'une quelconque des revendications précédentes, dans lequel la caméra de véhicule est une caméra monoculaire.

**11.** Procédé selon l'une quelconque des revendications précédentes, dans lequel une hypothèse d'objet est générée pour un objet en relief à partir d'un plan de paroi arrière et/ou d'un plan de paroi latérale.

**12.** Procédé de détection d'objets à partir d'une suite d'images d'une caméra de véhicule comprenant :

un appareil de commande de caméra qui est conçu pour

a) prendre une suite d'images avec la caméra de véhicule,

et une électronique d'évaluation qui est conçue pour

b) déterminer des caractéristiques correspondantes dans deux images successives,
c) calculer des homographies pour des caractéristiques correspondantes adjacentes afin de déterminer une pluralité de plans et de les affecter respectivement à un plan dans l'espace,
d) déterminer la pluralité de plans dans l'espace par affectation de caractéristiques correspondantes adjacentes à un plan dans l'espace, dans lequel sont prédéfinis comme plans possibles de l'espace : un plan de paroi arrière qui s'étend perpendiculairement à la direction longitudinale du véhicule, un plan de paroi latérale qui s'étend perpendiculairement à la direction latérale et un plan de sol qui s'étend perpendiculairement à la direction verticale,
e) segmenter des caractéristiques correspondantes sur la base des homographies calculées, et
f) détecter un ou plusieurs objets en tenant compte des plans déterminés et des caractéristiques segmentées.

Fig. 1

Fig. 2

a

21

20          d1

b

23          20          d3

Fig. 3

A    B    C    D    ...

1
2
3
⋮

Fig. 4

Fig. 5

a

b

c

d

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140161323 A1
- EP 2993654 A1
- US 2015086080 A1

**In der Beschreibung aufgeführte Nicht-Patentliteratur**

- **J. PRANKL et al.** Interactive object modelling based on piecewise planar surface patches. *Computer Vision and Image Understanding,* 2013, vol. 117 (6), 718-731
- Stereo-Based Vision System for Automotive Imminent Collision Detection. **P. CHANG et al.** Intelligent Vehicles Symposium, 2004 IEEE Parma. IEEE, 14. Juni 2004, 274-279
- **P. SINGHAL et al.** Top Down Approach to Detect Multiple Planes in Images. *Proceedings of the 2014 Indian Conference on Computer Vision Graphics and Image Processing,* 01. Januar 2014, 1-8
- **M.I.A. LOURAKIS et al.** Detecting Planes In An Uncalibrated Image Pair. *Proceedings of the 13th British Machine Vision Conference,* 02. September 2002, ISBN 978-1-901725-19-3, 57.1-57.10
- **HARTLEY, R. ; ZISSERMAN, A.** Tutorial: Multiple View Geometry. *CVPR,* Juni 1999, https://de.scribd.com/document/96810936/Hartley-Tut-4up abgerufen am 26.09.2016